(19) 

Europäisches Patentamt

European Patent Office

Office européen des brevets

(11) **EP 4 748 614 A1**

(12) **EUROPEAN PATENT APPLICATION**

(43) Date of publication:
**27.05.2026   Bulletin 2026/22**

(21) Application number: **24214555.5**

(22) Date of filing: **21.11.2024**

(51) International Patent Classification (IPC):
**B60L 1/00** $^{(2006.01)}$    **B60L 3/00** $^{(2019.01)}$
**B60L 3/04** $^{(2006.01)}$    **B60L 58/30** $^{(2019.01)}$
**B60L 58/40** $^{(2019.01)}$

(52) Cooperative Patent Classification (CPC):
**B60L 3/0069; B60L 1/003; B60L 3/0053;**
**B60L 3/04; B60L 58/30; B60L 58/40;**
H01M 2250/20

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **Volvo Truck Corporation**
**405 08 Göteborg (SE)**

(72) Inventors:
• **NEILSON, Rohan**
  **VÄSTERÅS (SE)**
• **BARKAH, Dani**
  **ESKILSTUNA (SE)**

(74) Representative: **Ström & Gulliksson AB**
**P.O. Box 4188**
**203 13 Malmö (SE)**

(54) **SYSTEM AND METHOD FOR GROUNDING ELECTRICAL COMPONENTS**

(57)     An electrical system is provided. The electrical system comprises an electrical energy source (12), an electrically floating electrical component (14A-14C), and a conduit (20) connecting the electrical energy source (12) to the electrical component (14A-14C). The electrical system (10) further comprising a switch (S1, S2) configured to selectively connect the electrical component (14A-14C) to ground (P).

FIG. 2

EP 4 748 614 A1

## Description

## TECHNICAL FIELD

The disclosure relates generally to electrical components. In particular aspects, the disclosure relates to systems and methods for grounding of electrical components. The disclosure can be applied to heavy-duty vehicles, such as trucks, buses, and construction equipment, among other vehicle types. Although the disclosure may be described with respect to a particular vehicle, the disclosure is not restricted to any particular vehicle. Further, the present disclosure may be implemented with stationary power generating systems.

## BACKGROUND

Vehicles, or other stationary power generating systems, may be equipped with high voltage systems such as fuel cell systems providing the required electrical power. Typically, one or more fuel cell systems are providing electrical power to a voltage traction bus of the vehicle. The traction voltage bus is normally floating to limit the potential for current flow between this bus and the chassis in the event of a fault from either voltage pole. Insulation is never perfect and isolation monitoring devices are employed to determine the resistance to current leakage. Monitoring the resistance or existence of a currently open fault is not feasible so the balance of isolation resistance secures a limit to the current flow in the event that a fault path becomes closed.

In general the voltage bus comprises a broad network of highly insulated components and cables with minor weaknesses at unknown locations. Exposed coolant on the other hand contributes a significant leakage through a known path.

Potentially accessible components in the coolant are conventionally bonded to the chassis to equalize potential and this also makes the coolant leakage path closed and part of the monitored network. This comes at the expense of lower isolation resistance, higher potential for corrosion or electrolysis, and relies on the presence of a functioning bond to the chassis without which the isolation resistance could improve significantly while the coolant path becomes an un-monitored hazard.

In view of this there is a need to improve safety, especially to keep the isolation resistance of electrical components at a high level without leaving it as an unknown parameter.

## SUMMARY

According to a first aspect, an electrical system is provided. The electrical system comprises: an electrical energy source, an electrically floating electrical component, and a conduit connecting the electrical energy source to the electrical component; wherein the electrical system further comprising a switch configured to selectively connect the electrical component to ground. The first aspect of the disclosure may seek to allow for periodic assessment of a drop in total isolation resistance, and to ensure safe operation. A technical benefit may include a more safe operation of the electrical system. The conduit may e.g. be a coolant conduit, or a significantly conductive insulator of some form, thereby allowing the use of any localized significant contributor to the isolation resistance with a common collector for stray currents. This then also applies to conventional batteries which may have shielded modules which could be floated within a main enclosure or a main enclosure which can be floated or isolated from the balance of chassis.

Optionally in some examples, including in at least one preferred example, the electrical energy source is a fuel cell system. A technical benefit may include improved safety and avoidance of dangerous levels of the total isolation resistance.

Optionally in some examples, including in at least one preferred example, the electrically floating electrical component is a coolant radiator, a charge air cooler, a coolant pump, a heat exchanger, or a three-way coolant valve. A technical benefit may include reduced corrosion within the cooling system.

Optionally in some examples, including in at least one preferred example, the switch is configured to selectively connect the electrical component to ground indirectly by selectively connecting the electrical component to a grounded electrical component. A technical benefit may include a more versatile system, and further the possibility to check an existing ground connection.

Optionally in some examples, including in at least one preferred example, the switch is configured to selectively connect the electrical component directly to ground. A technical benefit may include simple connection of the switch to ground.

Optionally in some examples, including in at least one preferred example, the electrical system further comprises: a control unit configured to control the operation of the switch. A technical benefit may include more intelligent checking and identification of a drop in the total isolation resistance.

Optionally in some examples, including in at least one preferred example, the control unit is further configured to determine an actual condition of the electrical energy source and/or the electrically floating electrical component, and wherein the operation of the switch is controlled based on the determined actual condition. A technical benefit may include improved safety since the switch may be controlled to open or close at situations where e.g. grounding is desired.

Optionally in some examples, including in at least one preferred example, the actual condition represents a risk parameter. A technical benefit may include improved safety, since a potential risk is mitigated when the floating component is grounded.

Optionally in some examples, including in at least one preferred example, the electrical system further comprises: an isolation resistance monitoring device configured to determine the total isolation resistance of the electrical system between a selected pole of a traction voltage bus and ground by repeatedly switching the connection to one of the poles; and wherein the control unit is configured to control the operation of the switch of the electrical system by synchronization with the switching operation of the isolation resistance monitoring device. A technical benefit may include reduced disturbance of resistance and capacitance measurement of the isolation resistance monitoring device, allowing improved assessment of resistance distribution within the electrical system. This further allows coolant conductivity to be reasonable estimated in the absence of a dedicated sensor.

Optionally in some examples, including in at least one preferred example, the electrical system comprises at least two fuel cell systems connected in parallel to a traction voltage bus, wherein the electrically floating electrical component is a coolant radiator, a charge air cooler, a coolant pump, a heat exchanger, or a three-way coolant valve, wherein the switch is configured to selectively connect the electrical component to ground indirectly by selectively connecting the electrical component to a grounded electrical component or wherein the switch is configured to selectively connect the electrical component directly to ground, wherein the electrical system further comprises: a control unit configured to control the operation of the switch, wherein the control unit is further configured to determine an actual condition representing a risk parameter of the electrical energy source and/or the electrically floating electrical component, and wherein the operation of the switch is controlled based on the determined risk parameter, wherein the electrical system further comprises: an isolation resistance monitoring device configured to determine the total isolation resistance of the electrical system; and wherein the control unit is configured to control the operation of the switch of the electrical system by synchronization with the switching operation of the isolation resistance monitoring device. A technical benefit may include improved and more accurate assessment of a drop in total isolation resistance, and to ensure safe operation, as well as allowing more fuel cell systems to be connected with less undesirable mitigating actions required to maintain isolation resistance.

According to a second aspect, a vehicle is provided. The vehicle comprises the electrical system according to the first aspect. The second aspect of the disclosure may seek to reduce the risk for dangerous leakage currents in the vehicle. A technical benefit may include a very versatile a robust handling of potential electrical risks in the vehicle.

According to a third aspect, a method for controlling isolation resistance of an electrical system is provided. The method comprises an electrical energy source, an electrically floating electrical component, and a conduit connecting the electrical energy source to the electrical component; wherein the method comprises: selectively connecting the electrical component to ground. The third aspect of the disclosure may seek to allow for periodic assessment of a drop in total isolation resistance, and to ensure safe operation. A technical benefit may include the ability to confirm a safe resistance to the electrical component while maintaining a higher isolation resistance.

Optionally in some examples, including in at least one preferred example, selectively connecting the electrical component to ground comprises selectively connecting the electrical component to a grounded electrical component. A technical benefit may include a more versatile system, and further the possibility to include a passive ground connection in the active ground check.

Optionally in some examples, including in at least one preferred example, selectively connecting the electrical component to ground comprises selectively connecting the electrical component directly to ground. A technical benefit may include simple connection of the electrical component to ground.

Optionally in some examples, including in at least one preferred example, the method further comprises controlling the operation of a switch selectively connecting the electrical component to ground. A technical benefit may include using simple components, such as a solid state relay, to connect the electrical component to ground.

Optionally in some examples, including in at least one preferred example, the electrical system further comprises an isolation resistance monitoring device configured to determine the total isolation resistance of the electrical system between a selected pole of a traction voltage bus and ground; wherein the method further comprises controlling the operation of the switch of the electrical system by synchronization with the switching operation of the isolation resistance monitoring device. A technical benefit may include reduced disturbance of resistance and capacitance measurement of the isolation resistance monitoring device, allowing improved assessment of resistance distribution within the electrical system. This further allows coolant conductivity to be reasonable estimated in the absence of a dedicated sensor.

Optionally in some examples, including in at least one preferred example, the method further comprises determining the total isolation resistance of the electrical system. A technical benefit may include improved monitoring of the electrical system, increasing safety and reducing the risk for potentially dangerous leakage currents.

Optionally in some examples, including in at least one preferred example, the method further comprises determining the total isolation resistance of the electrical system when the electrical component is connected to ground. A technical benefit may include enhanced capacitance measurement of the isolation resistance monitoring device.

Optionally in some examples, including in at least one preferred example, the method further comprises determining a drop in total isolation resistance. A technical benefit may include fast and accurate assessment of potential risks of the electrical system.

Optionally in some examples, including in at least one preferred example, the method further comprises determining the isolation resistance of an electrical component based on the determined drop in total isolation resistance when the electrical component is connected or disconnected from ground. A technical benefit may include a dedicated safety check of separate electrical components.

Optionally in some examples, including in at least one preferred example, the method further comprises determining the conductivity of the coolant inside the coolant conduit based on the determined resistance. A technical benefit may include a more complete assessment of electrical properties of the electrical system.

Optionally in some examples, including in at least one preferred example, the method further comprises determining the conductivity of the coolant inside the coolant conduit based on a predetermined geometry. A technical benefit may include a simple yet accurate strategy for assessing electrical properties of the electrical system.

The disclosed aspects, examples including any preferred examples, and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

**BRIEF DESCRIPTION OF THE DRAWINGS**

FIG. **1** is an exemplary side view of a vehicle according to an example.
FIG. **2** is an exemplary system diagram of an electrical system according to an example.
FIG. **3** is an exemplary system diagram of an electrical system according to an example.
FIG. **4A** is a diagram showing the total isolation resistance of an electrical system according to an example.
FIG. **4B** is a diagram showing various electrical parameters of an electrical system according to an example.
FIG. **5** is an exemplary system diagram of an electrical system according to an example.
FIG. **6** is a diagram showing various electrical parameters of an electrical system according to an example.
FIG. **7** is a diagram showing various electrical parameters of an electrical system according to an example.
FIG. **8** is another view of FIG. **2,** according to an example.
FIG. **9** is a flow chart of an exemplary method to control an isolation resistance of an electrical system according to an example.

**DETAILED DESCRIPTION**

The detailed description set forth below provides information and examples of the disclosed technology with sufficient detail to enable those skilled in the art to practice the disclosure.

Electrical safety is of great concern, especially in modern electrified vehicles. Floating electrical components, such as a fuel cell radiator and auxiliary components like a charge air cooler and a coolant pump, are provided with a switchable ground connection that allows the electrical components to be checked. During normal operation the safety of the traction voltage bus is improved through an increased isolation resistance. By periodically connecting the leakage paths the drop in total isolation resistance can be assessed to ensure that their contribution and capacitance is safely low and that the cooling-system or component connected therefore has not become dangerous. Hence, floating electrical components are no longer associated with unknown characteristics.

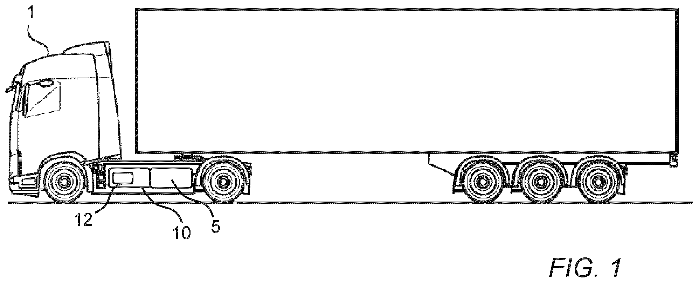

In FIG. **1** a vehicle **1** is schematically shown. The vehicle **1** may be of any possible type, such as a truck with a trailer as in the shown example. The vehicle **1** may be an electric vehicle, or a hybrid vehicle. The vehicle **1** comprises at least one propulsion unit **5,** e.g. comprising one or more electrical machines **5.** The vehicle **1** further comprises an electrical system **10** being powered by an electrical energy source **12,** such as one or more fuel cell systems. The electrical system **10** is typically arranged in connection with the at least one propulsion unit **5,** such that electrical power from the electrical energy source **12** can be supplied to the at least one propulsion unit **5.**

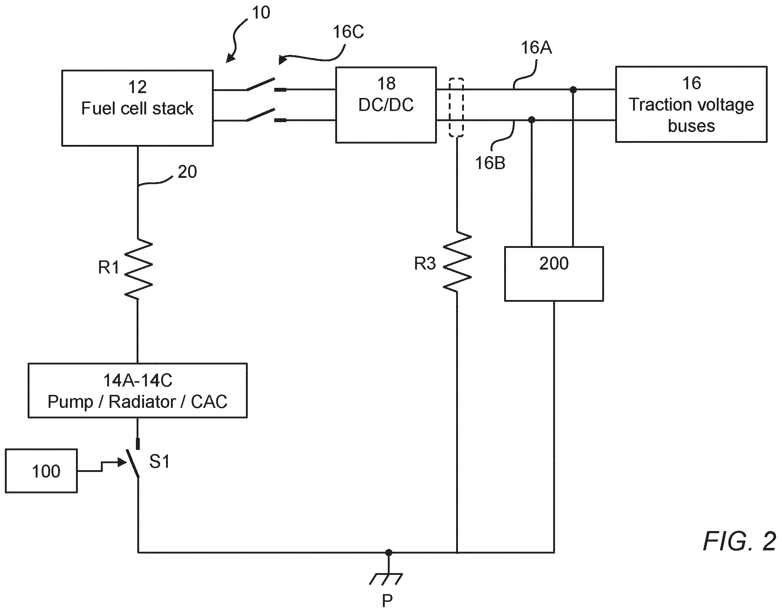

An example of an electrical system **10** is shown in FIG. **2.** The electrical system **10** is configured to be monitored by an isolation resistance monitoring system, which in the shown example is at least partly embodied by an isolation resistance monitor device **200.** Optionally, the isolation resistance monitoring system may be internally provided with the electrical system **10,** then relying on isolation resistance measurements on the main voltage bus once the electrical system **10** connects to the bus (whereby the internal isolation resistance monitoring system is disconnected).

The electrical system **10** comprises a fuel cell stack **12,** forming an electrical energy source. The fuel cell stack **12** is connectable to traction voltage buses **16** using contactors **16C** via a DC/DC converter **18.** The isolation resistance monitoring device **200** is connected to the traction voltage buses **16** and is configured to measure the resistance across the electrical system **10,** i.e. between the traction voltage poles **16A, 16B** and a chassis **P** of a vehicle.

The electrical system **10** further comprises one or more electrical components **14A-C.** Such electrical components **14A-C** may for example comprise a pump **14A,** a radiator **14B,** and a charge air cooler **14C.** The electrical components **14A-C** are connected to the fuel cell stack **12** by one or more liquid coolant conduits **20** forming one or more fluid paths. Each one of the liquid coolant conduits **20** may be represented by an electrical resistance **R1.** The magnitude of this resistance **R1** is dependent on the electrical conductivity of the coolant flowing inside the conduits **20.**

The electrical components **14A-C** are floating, i.e. there is no permanent connection to ground **P.** These components **14A-C** may then develop a significant voltage potential against the chassis/ground **P** and with an unknown isolation resistance and therefore an unknown current carrying capacity. This is due to the fact that the onboard isolation resistance monitor device **200** would no longer be able to detect them. Consequently this may make the floating electrical components **14A-C** into a separate and unknown hazard.

These floating electrical components **14A-C** are therefore provided with a switchable connection to ground **P.** The electrical system **10** comprises a switch **S1** which is controlled by a control unit **100** being configured to selectively close and open the switch **S1.**

In the shown example of **FIG. 2,** when closing the switch **S1** the electrical component **14A-C** is connected to ground **P** and isolation resistance measurement may be performed through the component's ground strap.

In the specific example shown in **FIG. 2,** the total resistance **R3,** when the switch **S1** is open, is 2MΩ. **R3** is the collected resistances to ground via all other paths than the target path over the electrical components **14A-C.** The total resistance over the electrical components **14A-C,** including the conduit **20,** is here simplified as resistance **R1** and assumed to be 0,5MΩ.

When the switch **S1** is open, the isolation resistance monitor device **200** normally sees **R3,** such as:

$$\frac{1}{R_{tot}} = \frac{1}{R_3}.$$

When S1 closes the resistance **R1** will contribute, such as:

$$\frac{1}{R_{tot}} = \frac{1}{R_1} + \frac{1}{R_3}.$$

In the above example, **Rtot** will drop from 2MΩ to 0,4MΩ. From this drop the unknown value of **R1** can be estimated by assuming the **R3** value is constant across the change:

$$\frac{1}{R_{tot\,(open)}} = \frac{1}{R_3} \text{ and } \frac{1}{R_{tot\,(closed)}} = \frac{1}{R_1} + \frac{1}{R_3},$$

so that where **R3** is constant:

$$\frac{1}{R_{tot\,(closed)}} = \frac{1}{R_1} + \frac{1}{R_{tot\,(open)}}.$$

Consequently, when the switch **S1** closes there will be a brief pole-to-chassis reduction of the total isolation resistance from 2MΩ to 0.4MΩ, with an added cooling-system-to-chassis resistance of 0,5MΩ.

The control unit **100** may be configured to determine an actual condition of the fuel cell stack **12** and/or the electrically floating electrical component **14A-C.** Such condition may e.g. represent a risk parameter. If e.g. the conductivity of the coolant flowing in said conduit **20** is dependent on temperature, a detected temperature increase may cause the conductivity to rise, thereby causing a decrease of the isolation resistance of the conduit **20.** Following such detection of increased temperature, the control unit **100** may be configured to close the switch **S1** for determining the isolation resistance of the cooling system, including the floating components **14A-C.** Other examples include when closing the switch is de-prioritized in a moving vehicle under heavy load conditions, or the switch may be held closed while the vehicle is stationary or when access covers are open.

The isolation resistance monitoring device **200** is preferably configured to determine the total isolation resistance **R3** of the electrical system **10** between a selected pole **16A, 16B** of a traction voltage bus **16** and ground **P** by repeatedly switching the connection to one of the poles **16A, 16B.** The control unit **100** is preferably configured to control the operation of the switch **S1** by synchronization with the switching operation of the isolation resistance monitoring device **200.**

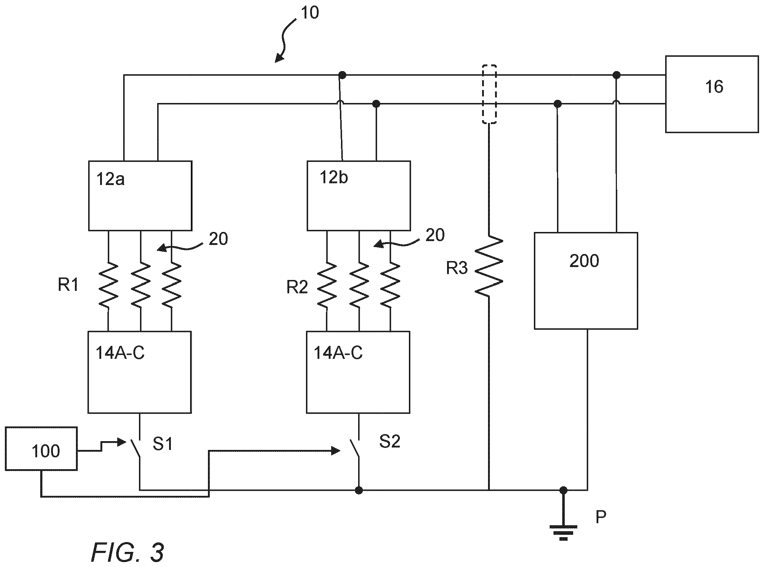

In **FIG. 3** another example of an electrical system **10** is schematically shown. The electrical system **10** comprises two parallel fuel cell systems **12a, 12b,** each fuel cell system **12a, 12b** being connected to a traction voltage bus **16.** Each fuel cell system **12a, 12b** is connected, through one or more conduits **20,** to one or more floating electrical components **14A-C.**

The electrical system **10** comprises a first switch **S1** and a second switch **S2.** The first switch **S1** is arranged between the floating components **14A-C** of the first fuel cell system **12a** and chassis ground **P,** such that closing of the switch **S1** will connect the one or more electrical components **14A-C** of the first fuel cell system **12a** to ground **P.** The second switch **S2** is arranged between the floating components **14A-C** of the second fuel cell system **12b** and chassis ground **P,** such that closing of the switch **S2** will connect the one or more electrical components **14A-C** of the second fuel cell system **12b** to ground **P.** A control unit **100** is configured to selectively close and open the switches **S1, S2.**

In the shown example of **FIG. 3,** when closing the switch **S1** the electrical component **14A-C** of the first fuel cell system **12a** is connected to ground **P** and isolation resistance measurement may be performed through the component's ground strap. When closing the switch **S2** the electrical component **14A-C** of the second fuel cell system **12b** is connected to ground **P** and isolation resistance measurement may be performed through the component's ground strap.

In the specific example shown in **FIG. 3,** the total resistance **R3,** when both switches **S1, S2** are open, is 2MΩ. **R3** is the collected resistances to ground via all other paths than the target path over the electrical components **14A-C** of the first and second fuel cell systems **12a, 12b.** The total resistance over each set of electrical components **14A-C** of the first and second fuel cell systems **12a, 12b,** including the respective conduits **20,** is here simplified as resistances **R1, R2** and assumed to be 0.5MΩ.

When the switches **S1, S2** are open, the isolation resistance monitor device **200** normally sees **R3,** such as:

$$\frac{1}{R_{tot}} = \frac{1}{R_3}.$$

When only **S1** closes the resistance **R1** will contribute, such as:

$$\frac{1}{R_{tot}} = \frac{1}{R_1} + \frac{1}{R_3}.$$

In the above example, **Rtot** will be 0,4MΩ. Consequently, when the switch **S1** closes there will be a brief pole-to-chassis reduction of the total isolation resistance from 2MΩ to 0.4MΩ, with an added cooling-system-to-chassis resistance of 0,5MΩ.

Since **R1 = R2** = 0.5MΩ, the same will apply if only switch **S2** closes.

As a comparison, using the same conditions but with **R1** and **R2** permanently grounded, the total isolation resistance between pole and chassis **P** would be 0.22MΩ.

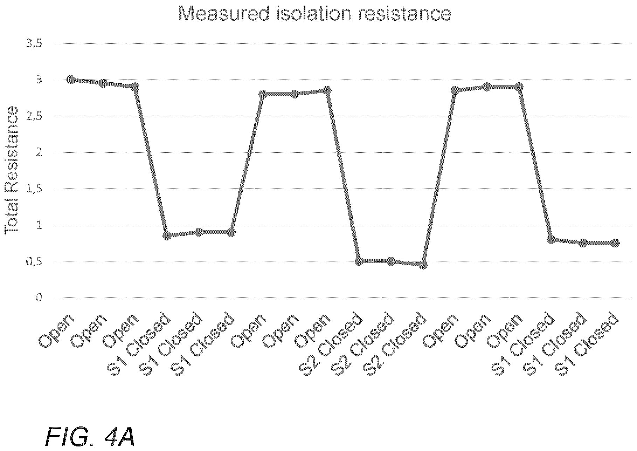

Still with reference to the electrical system **10** shown in **FIG. 3,** in **FIG. 4A** a diagram showing measured total isolation resistance (e.g. by using the isolation resistance monitor device **200**) is exemplified. When both switches **S1, S2** are open, the total isolation resistance is shown to be around 3MΩ corresponding to an example **of R3** = 3MΩ. When switch **S1** closes, the total isolation resistance drops temporarily to around 1MΩ. This would correspond to a value **of R1** of approximately 1.5MΩ. When switch **S1** again opens, the total isolation resistance returns to approximately 3MΩ. When switch **S2** closes, the total isolation resistance drops temporarily to around 0.5MΩ. This would correspond to a value of **R2** of approximately 0.6MΩ. When switch **S2** again opens, the total isolation resistance returns to approximately 3MΩ.

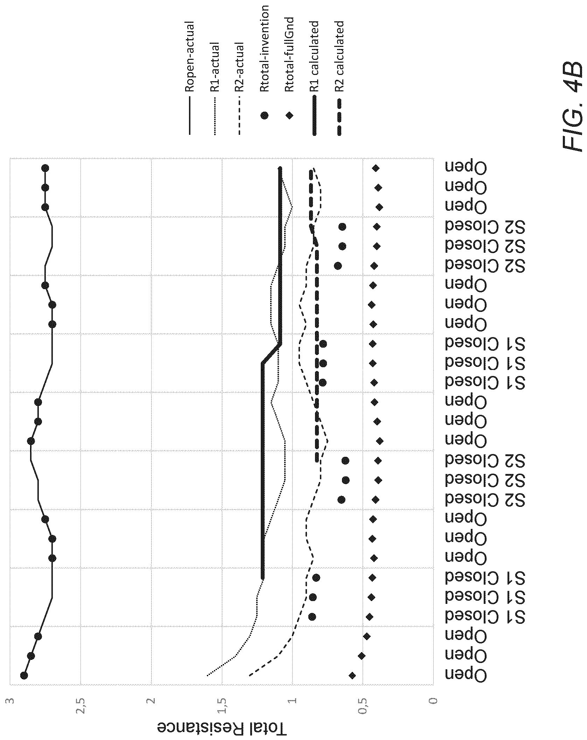

A more detailed diagram of a similar example is shown in **FIG. 4B.** Here, **R1** represents the isolation resistance of the first fuel cell stack **12a,** the conduit **20,** and the associated floating electrical components **14A-C. R2** represents the isolation resistance of the second fuel cell stack **12b,** the conduit **20,** and the associated floating electrical components **14A-C.** As is shown in **FIG. 4B, R1** and **R2** (represented by thin dashed lines) are not constant but they vary with time. Also the varying resistance of the balance of the vehicle, **R3,** is shown by the solid line. The thin solid line at the top of the diagram shows the actual total isolation resistance **R3** when both switches **S1, S2** are open. The round markers represent the measured total isolation resistance, and the thick lines (solid and dashed) represent the calculated values of **R1, R2.** As is clear from **FIG. 4B,** selectively connecting the floating components **14A-C** to ground will allow for accurate measurements of the total isolation resistance of the electrical system **10,** as well as accurate measurements of **R1, R2.** Yet further, the selective connection of the floating electrical components **14A-C** to ground **P** also creates a less drop than if the components **14A-C** would be permanently grounded, as indicated by the diamond-shaped markers.

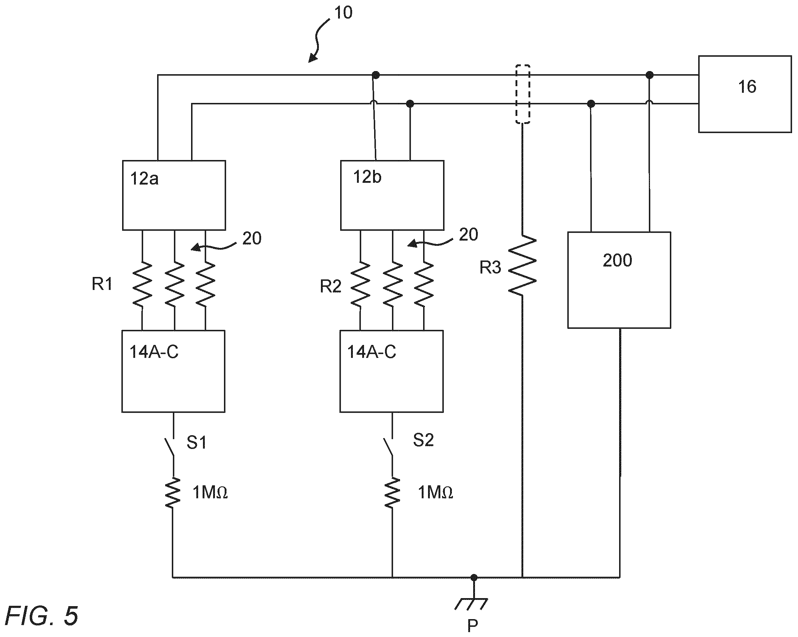

**FIG. 5** shows an example of an electrical system **10.** The electrical system **10** is identical to the electrical system **10** shown in **FIG. 3,** except for an added resistance of 1MΩ in the switched connection to ground **P,** i.e. between each one of the switches **S1, S2** and the chassis ground **P.** Where the resistance between each one of the first and second fuel cell stacks **12a, 12b** and the cooling system (represented by the floating electrical components **14A-C**) is always low but normally safe, a known resistance (such as the 1MΩ resistors) can be placed in the switched ground line. This does not allow complete grounding of the cooling system but keeps the total isolation resistance higher and **R1, R2** can still be calculated.

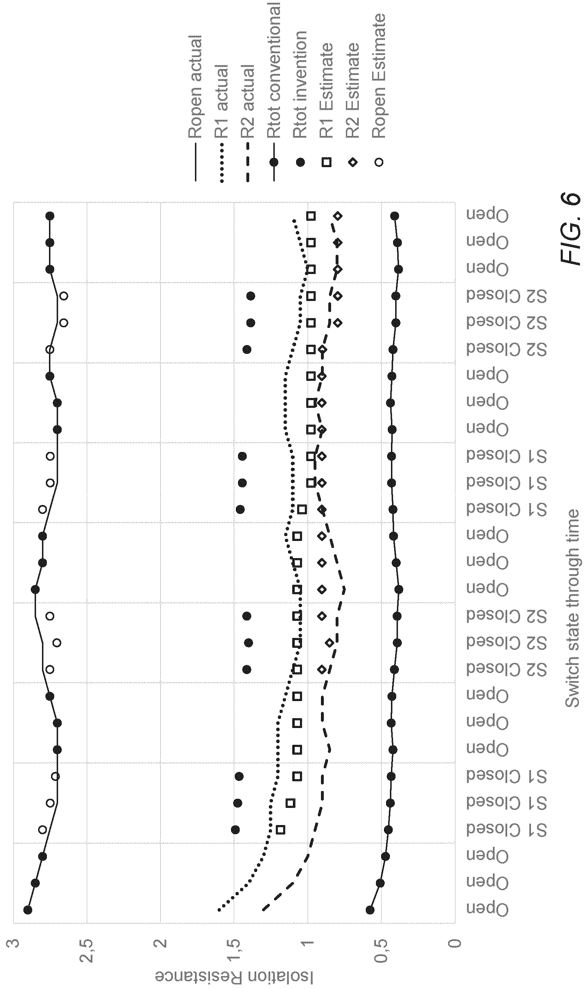

A detailed diagram of such example is shown in **FIG. 6.** Here, **R1** represents the isolation resistance of the first fuel cell stack **12a,** the conduit **20,** and the associated floating electrical components **14A-C. R2** represents the isolation resistance of the second fuel cell stack **12b,** the conduit **20,** and the associated floating electrical components **14A-C.** As is shown in **FIG. 6, R1** and **R2** (represented by thin dashed lines) are not constant but they vary with time. As compared with the example shown in **FIG. 3** and **FIG. 4B,** higher resistance is traded when the switches **S1, S2** close for measuring accuracy and forgoing the ability to collapse the voltage potential between the component and chassis. The diagram in **FIG. 6** also shows an estimated "open" resistance when the switches **S1, S2** are closed, also using individual values instead of averages as used in **FIG. 4B.**

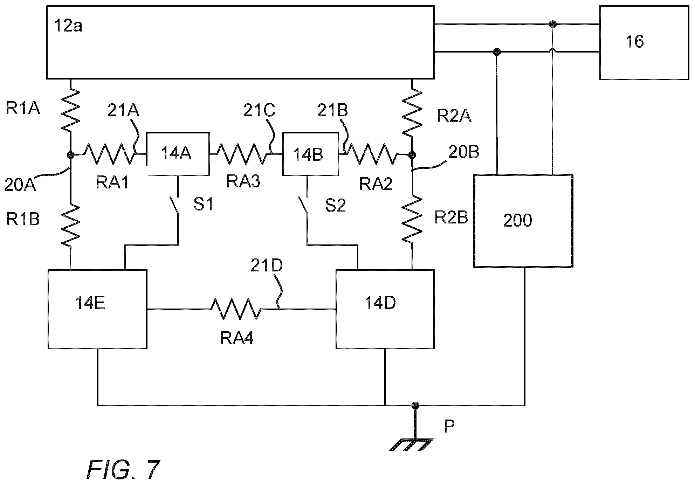

Turning to **FIG. 7,** an example of an electrical system **10** is shown. Complete selective grounding of a cooling system may not be relevant to all installations and sometimes a more complicated or mixed approach may need to be taken.

For example cases exist where an isolated coolant pump **14D** is not available and/or an ungrounded radiator **14E** is impractical or unacceptable. Here the auxiliary components **14A-B** could be left floating but might pose an unknown risk, or they might be grounded reducing the total isolation resistance. By selectively grounding the auxiliary components **14A-B** the total isolation resistance can be kept a little higher while still allowing them to be measured. Furthermore by grounding the auxiliary components **14A-B** through other grounded components **14D-E** these ground connections may be checked since a missing ground would result in a deviation from the normal proportionality. For example, minor auxiliary components **14D-E** with a high resistance to them (such as a charge air cooler, a three-way valve, etc.) may be left grounded as bleed resistors and the larger auxiliary components such as pump, radiator, or heat exchanger **14A-B** may be selectively grounded instead. It should be noted that a larger auxiliary component **14A** may be grounded through another component separate from the cooling system shown, and allowing the passive ground of such another component to be tested by the active ground test provided by the larger auxiliary component **14A.**

In the shown example the fuel cell stack **12A** is connected to a permanently grounded electrical component (such as a charge air cooler) **14E** through a coolant conduit **20** represented by two series resistors **R1A, R1B.** The conduit **20A** is branched off via a conduit branch **21A** connecting the fuel cell stack **12A** to a floating electrical component (such as a pump) **14A.** The conduit branch **21A** is represented by a resistor **RA1.** The floating electrical component **14A** is connected to the grounded electrical component **14E** through a switch **S1** allowing for selective electrical connection, and thereby selective indirect grounding of the floating electrical component **14A.**

The fuel cell stack **12A** is further connected to a permanently grounded electrical component (such as a three way valve) **14D** through a coolant conduit **20B** represented by two series resistors **R2A, R2B.** The conduit **20B** is branched off via a conduit branch **21B** connecting the fuel cell stack **12A** to a floating electrical component (such as a radiator) **14B.** The conduit branch **21B** is represented by a resistor **RA2.** The floating electrical component **14B** is connected to the grounded electrical component **14D** through a switch **S2** allowing for selective electrical connection, and thereby selective indirect grounding of the floating electrical component **14B.**

The floating electrical component **14A** is connected to the floating electrical component **14B** through a conduit **21C,** represented by a resistance **RA3.** The grounded electrical component **14E** is connected to the grounded electrical component **14D** through a conduit **21D,** represented by a resistance **RA4.**

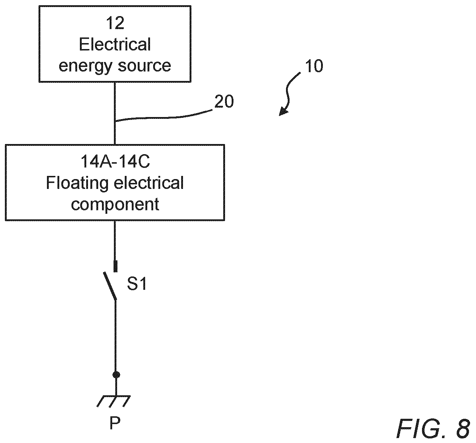

An example of an electrical system **10** is shown in **FIG. 8.** The electrical system **10** comprises an electrical energy source **12,** an electrically floating electrical component **14A-14C,** and a conduit **20** connecting the electrical energy source **12** to the electrical component **14A-14C.** The electrical system **10** further comprises a switch **S1** configured to selectively connect the electrical component **14A-14C** to ground **P.** The electrical energy source **12** may e.g. be a battery or an electric power take-off to an electrified trailer. The conduit **20** may have an isolation resistance or a bundled resistance, and the electrical components **14A-C** may be a leakage current collector.

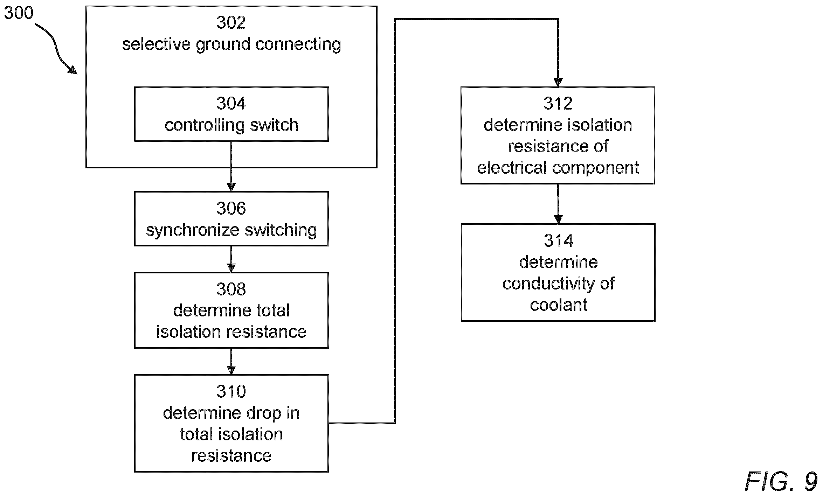

**FIG. 9** shows a method **300** for controlling isolation resistance of an electrical system **10.** The electrical system **10** comprises an electrical energy source **12,** an electrically floating electrical component **14A-C,** and a coolant conduit **20** connecting the electrical energy source **12** to the electrical component **14A-C.** The method comprises **302** selectively connecting the electrical component **14A-C** to ground **P.** In the shown example, selectively connecting **302** the electrical component **14A-C** to ground **P** comprises controlling **304** the operation of a switch **S1, S2** to selectively connecting the electrical component **14A-C** to ground **P.**

The electrical system **10** may further comprise an isolation resistance monitoring device **200** configured to determine the total isolation resistance of the electrical system **10** between a selected pole **16A-B** of a traction voltage bus **16** and ground **P** by repeatedly switching the connection to one of the poles **16A-B.** The method **300** may in some examples further comprise controlling the operation of the switch **S1, S2** of the electrical system **10** by synchronizing **306** with the switching operation of the isolation resistance monitoring device **200.**

The method **300** may further comprise determining **308** the total isolation resistance of the electrical system **10,** and from the determined total isolation resistance the method **300** may determine **310** a drop in total isolation resistance. The method **300** may further determine **312** the isolation resistance of an electrical component **14A-C** based on the determined drop in total isolation resistance when the electrical component **14A-C** is connected or disconnected from ground **P.**

As is further shown in **FIG. 9,** the method **300** may further comprise determine **314** the conductivity of the coolant inside the coolant conduit **20** based on the determined resistance. The conductivity of the coolant inside the coolant conduit **20** may be determined based on a predetermined geometry of the conduit **20,** such as length and cross-sectional area. Optionally, the method **300** may determine the conductivity of the coolant as temperature dependent.

Example 1: An electrical system, comprising: an electrical energy source (12), an electrically floating electrical component (14A-14C), and a conduit (20) connecting the electrical energy source (12) to the electrical component (14A-14C); wherein the electrical system (10) further comprising a switch (S1, S2) configured to selectively connect the electrical component (14A-14C) to ground (P).

Example 2: The electrical system of claim 1, wherein the electrical energy source (12) is a fuel cell system (12).

Example 3: The electrical system of any of Examples 1-2, wherein the electrically floating electrical component (14A-C) is a coolant radiator, a charge air cooler, a coolant pump, a heat exchanger, or a three-way coolant valve.

Example 4: The electrical system of any of Examples 1-3, wherein the switch (S1, S2) is configured to selectively connect the electrical component (14A-C) to ground (P) indirectly by selectively connecting the electrical component (14A-C) to a grounded electrical component (14D).

Example 5: The electrical system of any of Examples 1-3, wherein the switch (S1, S2) is configured to selectively connect the electrical component (14A-C) directly to ground (P).

Example 6: The electrical system of any of Examples 1-5, further comprising: a control unit (100) configured to control the operation of the switch (S1, S2).

Example 7: The electrical system of Example 6, wherein the control unit (100) is further configured to determine an actual condition of the electrical energy source (12) and/or the electrically floating electrical component (14A-14C), and wherein the operation of the switch (S1, S2) is controlled based on the determined actual condition.

Example 8: The electrical system of Example 7, wherein the actual condition represents a risk parameter.

Example 9: The electrical system of any of Examples 1-6, further comprising: an isolation resistance monitoring device (200) configured to determine the total isolation resistance (R3) of the electrical system (10) between a selected pole (16A, 16B) of a traction voltage bus (16) and ground (P) by repeatedly switching the connection to one of the poles (16A, 16B); and wherein the control unit (100) is configured to control the operation of the switch (S1, S2) of the electrical system (10) by synchronization with the switching operation of the isolation resistance monitoring device (200).

Example 10: The electrical system of Example 1, comprising at least two fuel cell systems (12A, 12B) connected in parallel to a traction voltage bus (16),

wherein the electrically floating electrical component (14A-C) is a coolant radiator, a charge air cooler, a coolant pump, a heat exchanger, or a three-way coolant valve, wherein the switch (S1, S2) is configured to selectively connect the electrical component (14A-C) to ground (P) indirectly by selectively connecting the electrical component (14A-C) to a grounded electrical component (14D) or wherein the switch (S1, S2) is configured to selectively connect the electrical component (14A-C) directly to ground (P), wherein the electrical system further comprises: a control unit (100) configured to control the operation of the switch (S1, S2), wherein the control unit (100) is further configured to determine an actual condition representing a risk parameter of the electrical energy source (12) and/or the electrically floating electrical component (14A-C), and wherein the operation of the switch (S1, S2) is controlled based on the determined risk parameter, wherein the electrical system further comprises: an isolation resistance monitoring device (200) configured to determine the total isolation resistance (R3) of the electrical system (10) between a selected pole (16A, 16B) of a traction voltage bus (16) and ground (P) by repeatedly switching the connection to one of the poles (16A, 16B); and wherein the control unit (100) is configured to control the operation of the switch (S1, S2) of the electrical system (10) by synchronization with the switching operation of the isolation resistance monitoring device (200).

Example 11: A vehicle comprising the electrical system (10) according to any of Examples 1-10.

Example 12: A method for controlling isolation resistance of an electrical system (10), comprising an electrical energy source (12), an electrically floating electrical component (14A-C), and a conduit (20) connecting the electrical energy source (12) to the electrical component (14A-C); wherein the method comprises: selectively connecting the electrical component (14A-C) to ground (P).

Example 13: The method of Example 12, wherein selectively connecting the electrical component (14A-C) to ground (P) comprises selectively connecting the electrical component (14A-C) to a grounded electrical component (14D).

Example 14: The method of Example 12, wherein selectively connecting the electrical component (14A-C) to ground (P) comprises selectively connecting the electrical component (14A-C) directly to ground (P).

Example 15: The method of any of Examples 12-14, further comprising: controlling the operation of a switch (S1, S2) to selectively connecting the electrical component (14A-C) to ground (P).

Example 16: The method of Example 15, wherein the electrical system (10) further comprises an isolation resistance monitoring device (200) configured to determine the total isolation resistance (R3) of the electrical system (10) between a selected pole (16A-B) of a traction voltage bus (16) and ground (P) by repeatedly switching the connection to one of the poles (16A-B);

wherein the method further comprises controlling the operation of the switch (S1, S2) of the electrical system (10) by synchronization with the switching operation of the isolation resistance monitoring device (200).

Example 17: The method of any of Examples 12-16, further comprising: determining the total isolation resistance of the electrical system (10).

Example 18: The method of Example 17, further comprising: determining the total isolation resistance of the electrical system (10) when the electrical component (14A-C) is connected to ground (P).

Example 19: The method of any of Examples 17-18, further comprising: determining a drop in total isolation resistance.

Example 20: The method of Example 19, further comprising determining the isolation resistance of an electrical component (14A-C) based on the determined drop in total isolation resistance when the electrical component (14A-C) is connected or disconnected from ground (P).

Example 21: The method of any of Examples 12-20, further comprising determining the conductivity of the coolant inside the coolant conduit (20) based on the determined resistance.

Example 22: The method of Example 21, further comprising determining the conductivity of the coolant inside the coolant conduit (20) based on a predetermined geometry.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

**Claims**

1. An electrical system, comprising:

   an electrical energy source (12), an electrically floating electrical component (14A-14C), and a conduit (20) connecting the electrical energy source (12) to the electrical component (14A-14C);
   wherein the electrical system (10) further comprising a switch (S1, S2) configured to selectively connect the electrical component (14A-14C) to ground (P).

2. The electrical system of claim 1, wherein the electrical energy source (12) is a fuel cell system (12).

3. The electrical system of any of claims 1-2, wherein the electrically floating electrical component (14A-C) is a coolant radiator, a charge air cooler, a coolant pump, a heat exchanger, or a three-way coolant valve.

4. The electrical system of any of claims 1-3, wherein the switch (S1, S2) is configured to selectively connect the electrical component (14A-C) to ground (P) indirectly by selectively connecting the electrical component (14A-C) to a grounded electrical component (14D).

5. The electrical system of any of claims 1-3, wherein the switch (S1, S2) is configured to selectively connect the electrical component (14A-C) directly to ground (P).

6. The electrical system of any of claims 1-5, further comprising:
a control unit (100) configured to control the operation of the switch (S1, S2).

7. The electrical system of claim 6, wherein the control unit (100) is further configured to determine an actual condition of the electrical energy source (12) and/or the electrically floating electrical component (14A-14C), and wherein the operation of the switch (S1, S2) is controlled based on the determined actual condition.

8. The electrical system of claim 7, wherein the actual condition represents a risk parameter.

9. The electrical system of any of claims 1-6, further comprising:

an isolation resistance monitoring device (200) configured to determine the total isolation resistance (R3) of the electrical system (10) between a selected pole (16A, 16B) of a traction voltage bus (16) and ground (P) by repeatedly switching the connection to one of the poles (16A, 16B); and
wherein the control unit (100) is configured to control the operation of the switch (S1, S2) of the electrical system (10) by synchronization with the switching operation of the isolation resistance monitoring device (200).

10. The electrical system of claim 1, comprising at least two fuel cell systems (12A, 12B) connected in parallel to a traction voltage bus (16),

wherein the electrically floating electrical component (14A-C) is a coolant radiator, a charge air cooler, a coolant pump, a heat exchanger, or a three-way coolant valve,
wherein the switch (S1, S2) is configured to selectively connect the electrical component (14A-C) to ground (P) indirectly by selectively connecting the electrical component (14A-C) to a grounded electrical component (14D) or wherein the switch (S1, S2) is configured to selectively connect the electrical component (14A-C) directly to ground (P),
wherein the electrical system further comprises:

a control unit (100) configured to control the operation of the switch (S1, S2),
wherein the control unit (100) is further configured to determine an actual condition representing a risk parameter of the electrical energy source (12) and/or the electrically floating electrical component (14A-C), and wherein the operation of the switch (S1, S2) is controlled based on the determined risk parameter,
wherein the electrical system further comprises:

an isolation resistance monitoring device (200) configured to determine the total isolation resistance (R3) of the electrical system (10) between a selected pole (16A, 16B) of a traction voltage bus (16) and ground (P) by repeatedly switching the connection to one of the poles (16A, 16B); and wherein the control unit (100) is configured to control the operation of the switch (S1, S2) of the electrical system (10) by synchronization with the switching operation of the isolation resistance monitoring device (200).

11. A vehicle comprising the electrical system (10) according to any of claims 1-10.

12. A method for controlling isolation resistance of an electrical system (10), comprising an electrical energy source (12), an electrically floating electrical component (14A-C), and a conduit (20) connecting the electrical energy source (12) to the electrical component (14A-C); wherein the method comprises: selectively connecting the electrical component (14A-C) to ground (P).

13. The method of claim 12, wherein selectively connecting the electrical component (14A-C) to ground (P) comprises selectively connecting the electrical component (14A-C) to a grounded electrical component (14D).

14. The method of claim 12, wherein selectively connecting the electrical component (14A-C) to ground (P) comprises selectively connecting the electrical component (14A-C) directly to ground (P).

15. The method of any of claims 12-14, further comprising:
controlling the operation of a switch (S1, S2) to selectively connecting the electrical component (14A-C) to ground (P).

FIG. 1

FIG. 2

FIG. 3

16

200

P

R3

20

12b

14A-C

R2

S2

10

20

12a

14A-C

R1

S1

100

FIG. 4A

FIG. 4B

FIG. 5

EP 4 748 614 A1

*FIG. 6*

FIG. 7

EP 4 748 614 A1

```
        ┌─────────────────┐
        │       12        │
        │   Electrical    │
        │  energy source  │            10
        └─────────────────┘
                 │  20
                 │
        ┌─────────────────┐
        │    14A-14C      │
        │Floating electrical│
        │    component    │
        └─────────────────┘
                 │
                 ⌐ S1
                 /
                 │
                 ●
                ─┴─
                 P
```

*FIG. 8*

300

302
selective ground connecting

304
controlling switch

306
synchronize switching

308
determine total isolation resistance

310
determine drop in total isolation resistance

312
determine isolation resistance of electrical component

314
determine conductivity of coolant

*FIG. 9*

Europäisches
Patentamt
European
Patent Office
Office européen
des brevets

**EUROPEAN SEARCH REPORT**

Application Number

EP 24 21 4555

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/326986 A1 (GALE ALLAN R [US] ET AL) 16 November 2017 (2017-11-16) | 1-9, 11-15 | INV. B60L1/00 |
| A | * paragraph [0018] - paragraph [0023]; figures 1-3 * | 10 | B60L3/00 B60L3/04 |
| | ----- | | B60L58/30 |
| A | US 2014/266223 A1 (FOLEY ROBERT S [US]) 18 September 2014 (2014-09-18) * paragraph [0017] - paragraph [0024]; figures 1,2 * | 1-15 | B60L58/40 |
| | ----- | | |

TECHNICAL FIELDS
SEARCHED (IPC)

B60L
H01M

The present search report has been drawn up for all claims

| Place of search | Date of completion of the search | Examiner |
|---|---|---|
| The Hague | 25 April 2025 | Degraeve, Alexis |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 21 4555

25-04-2025

| Patent document cited in search report | Publication date | Patent family member(s) | Publication date |
|---|---|---|---|
| US 2017326986 A1 | 16-11-2017 | CN 105486923 A | 13-04-2016 |
| | | DE 102015116106 A1 | 07-04-2016 |
| | | US 2016096433 A1 | 07-04-2016 |
| | | US 2017326986 A1 | 16-11-2017 |
| | | US 2019351771 A1 | 21-11-2019 |
| US 2014266223 A1 | 18-09-2014 | CN 104051759 A | 17-09-2014 |
| | | DE 102014103117 A1 | 18-09-2014 |
| | | US 2014266223 A1 | 18-09-2014 |